# EUROPÄISCHE PATENTSCHRIFT

(11) **EP 2 940 336 B1**
(45) Veröffentlichungstag und Bekanntmachung des Hinweises auf die Patenterteilung: **14.03.2018**
(21) Anmeldenummer: 15162143.0
(22) Anmeldetag: 01.04.2015
(51) Int. Cl.: F16D 13/75

(54) **EINTEILIGER HALTER FÜR EINE NACHSTELLEINRICHTUNG, NACHSTELLEINRICHTUNG**
ONE-PIECE RETAINER FOR AN ADJUSTMENT DEVICE, ADJUSTMENT DEVICE
SUPPORT MONOBLOC POUR UN DISPOSITIF DE RÉGLAGE, DISPOSITIF DE RÉGLAGE

(30) Priorität: 29.04.2014 DE 102014208091
(43) Veröffentlichungstag der Anmeldung: 04.11.2015
(73) Patentinhaber: Schaeffler Technologies AG & Co. KG, 91074 Herzogenaurach (DE)
(72) Erfinder: Voorspoels, Ludovic, 67410 Drusenheim (FR); Fohrer, Thierry, 67850 Offendorf (FR); Merckling, Tony, 67340 Schillersdorf (FR); Kappelmann, Ralf, 77871 Renchen (DE)

(56) Entgegenhaltungen:
- DE-A1-102009 049 258
- DE-A1-102010 025 330
- DE-A1-102010 035 121
- DE-A1-102011 018 412
- DE-A1-102013 203 378

## Beschreibung

Die Erfindung betrifft einen einteiligen Halter für eine Nachstelleinrichtung und eine Nachstelleinrichtung für eine Reibungskupplung.

Aus dem Stand der Technik ist eine Vielzahl von Spindelhaltern bekannt. Die Spindelhalter weisen Arme zur Montage einer Spindel auf. Ein Ende der Spindel wird dabei meist mit einer Buchse versehen, um ein verliersicheres Betreiben einer Nachstelleinrichtung zu ermöglichen.

Nachteilig am Stand der Technik ist, dass die Buchsen infolge einer im Betrieb der Nachstelleinrichtung auftretenden Fliehkrafteinwirkung zerstört werden. Wartungsarbeiten sowie der Ersatz der Buchsen sind unumgänglich.

Aus der DE 10 2010 025 330 A1 ist ein Halter für eine Nachstelleinrichtung einer Reibungskupplung bekannt, der auf den Oberbegriff des Patentanspruchs 1 lesbar ist.

Es besteht die technische Aufgabe, einen Halter für eine Nachstelleinrichtung sowie eine Nachstelleinrichtung, um die Nachteile aus dem Stand der Technik zu überwinden.

Die Aufgabe wird erfindungsgemäß durch einen Halter gemäß Patentanspruch 1 gelöst. Bevorzugte Ausführungsbeispiele sind in den abhängigen Patentansprüchen dargelegt.

Durch das Vorsehen des Halters mit dem Ansatzstück kann auf eine Buchse, wie sie aus dem Stand der Technik bekannt ist, verzichtet werden.

Auf diese Weise ist eine Zerstörung der Buchse und eine damit verbundene Beeinträchtigung der Funktion der Nachstelleinrichtung ausgeschlossen.

Vorzugsweise ist der Halter ein Spindelhalter. Bevorzugt ist der Halter aus Blech gefertigt.

Bevorzugt ist das Ansatzstück als ein Schnappmechanismus ausgebildet, der bei einer Krafteinwirkung seine Ausgangslage ändert. Infolge der Elastizität des Ansatzstückes kehrt das Ansatzstück nach erfolgter Montage der Spindel wieder in seine Ausgangslage zurück.

Bevorzugt ist die Reibungskupplung eine Einscheiben- oder eine Doppelkupplung.

In einer weiteren erfindungsgemäßen Ausführungsform ist das Ansatzstück in einer Verlängerung der ersten Öffnung angeordnet.

Vorzugsweise ist das Ansatzstück in der Verlängerung der ersten Öffnung hin zur Befestigungsplatte angeordnet.

Bevorzugt dient das Ansatzstück als Drehachse und hält die Spindel fest.

In einer weiteren erfindungsgemäßen Ausführungsform ist das Ansatzstück ein Teilstück des ersten Armes, das eine Verbindung mit dem ersten Arm oder der Befestigungsplatte aufweist.

Auf diese Weise ist ein einteiliger Halter ausbildbar. Aufgrund der einteiligen Ausgestaltung des Halters sind keine weiteren Halterteile mehr notwendig. Der Halter ist aus einem Stück fertigbar.

Vorzugsweise weist das Ansatzstück einen Kragarm auf, der als ein elastisch federnder Ansatz ausgestaltet ist.

In einer weiteren erfindungsgemäßen Ausführungsform weist das Ansatzstück eine Ausnehmung auf, um das erste Spindelwellenende zu lagern.

Auf diese Weise ist eine einfache Möglichkeit vorgesehen, die Spindel verliersicher im Halter aufzunehmen.

In einer weiteren erfindungsgemäßen Ausführungsform ist die Ausnehmung Kreissegment-förmig ausgestaltet.

Auf diese Weise ist eine Rotation der Spindelwelle möglich.

In einer weiteren erfindungsgemäßen Ausführungsform weist das Ansatzstück gegenüber dem ersten Arm eine Neigung auf.

Auf diese Weise lässt sich das erste Spindelwellenende bei einer Montage einfacher in die erste Öffnung einführen.

In einer weiteren erfindungsgemäßen Ausführungsform ist das Ansatzstück eingerichtet, während eines Einbringens des ersten Spindelwellenendes in die erste Öffnung nachzugeben.

Bedingt durch eine vom ersten Spindelwellenende erzeugten Druckkraft, erfährt Ansatzstück eine Verschiebung. Dabei ändert das Ansatzstück seine Ausgangslage und neigt sich weg vom ersten Arm nach außen.

Bevorzugt ist das erste Spindelwellenende ein antriebsritzelseitiges Ende. Bevorzugt ist das zweite Spindelwellenende ein spindelmutterseitiges Ende.

In einer weiteren erfindungsgemäßen Ausführungsform ist das Ansatzstück eingerichtet, nach einem erfolgten Einbringen des ersten Spindelwellenendes in seine Ausgangslage zurückzufedern.

Bevorzugt ist unter einem Zurückfedern des Ansatzstückes ein Zurückzuschnappen zu verstehen. Das Zurückfedern bzw. das Zurückschnappen erfolgt sobald die Spindel mit ihrem ersten Spindelwellenende in der ersten Öffnung zentriert ist.

Ferner wird die Aufgabe erfindungsgemäß insbesondere gelöst durch eine Nachstelleinrichtung für eine Reibungskupplung eines Kraftfahrzeugs, aufweisend
- einen einteiligen Halter wie oben beschrieben und
- eine Spindel zum axialen Verlagern einer auf der Spindel aufgeschraubten Spindelmutter zum relativen Verdrehen eines Rampenrings in Umfangsrichtung zu einer an dem Rampenring abgleitenden Gegenrampe zur Nachstellung eines verschließbedingten Fehlabstands zwischen einer Anpressplatte und einer Gegenplatte der Reibungskupplung durch ein Verdrehen der Spindel.

Durch das Vorsehen des Halters mit dem Ansatzstück kann auf eine Buchse, wie sie aus dem Stand der Technik bekannt ist verzichtet werden.

Vorzugsweise ist ein Ritzel drehfest auf der Spindel montiert.

Bevorzugt ist eine Sperrklinke vorgesehen, die eingerichtet ist, eine Drehung des Ritzels in eine Richtung zu verhindern.

Bevorzugt ist die Sperrklinke auf der Befestigungsplatte angeordnet.

Die Erfindung wird nun beispielhaft durch Figuren veranschaulicht. Es zeigen:
Fig. 1 einen erfindungsgemäßen einteiligen Halter für eine Nachstelleinrichtung einer Reibungskupplung in perspektivischer Ansicht,
Fig. 2 den erfindungsgemäßen Halter aus Fig. 1 in einer Seitenansicht,
Fig. 3 eine Spindelwelle mit Anbauteilen für den erfindungsgemäßen Halter aus Fig. 1 in einer Seitenansicht,
Fig. 4 den Halter aus Fig. 2 mit der Spindelwelle aus Fig. 3 kurz vor dem montierten Zustand,
Fig. 5 eine erfindungsgemäße Nachstelleinrichtung auf einer Anpressplatte in perspektivischer Ansicht und
Fig. 6 eine Detailansicht aus Fig. 5.

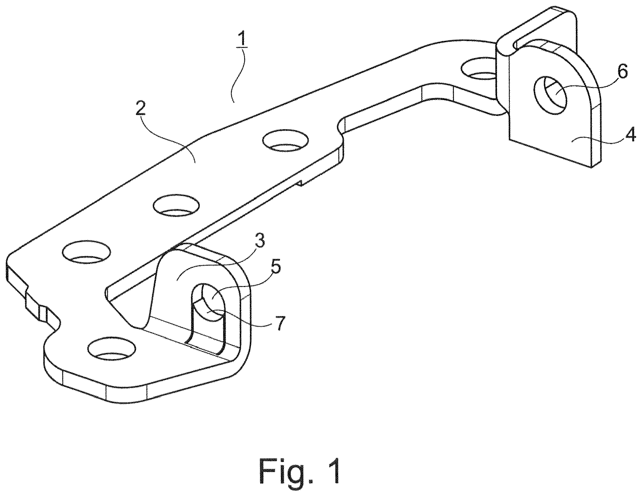

Fig. 1 zeigt einen erfindungsgemäßen einteiligen Halter für eine Nachstelleinrichtung einer Reibungskupplung.

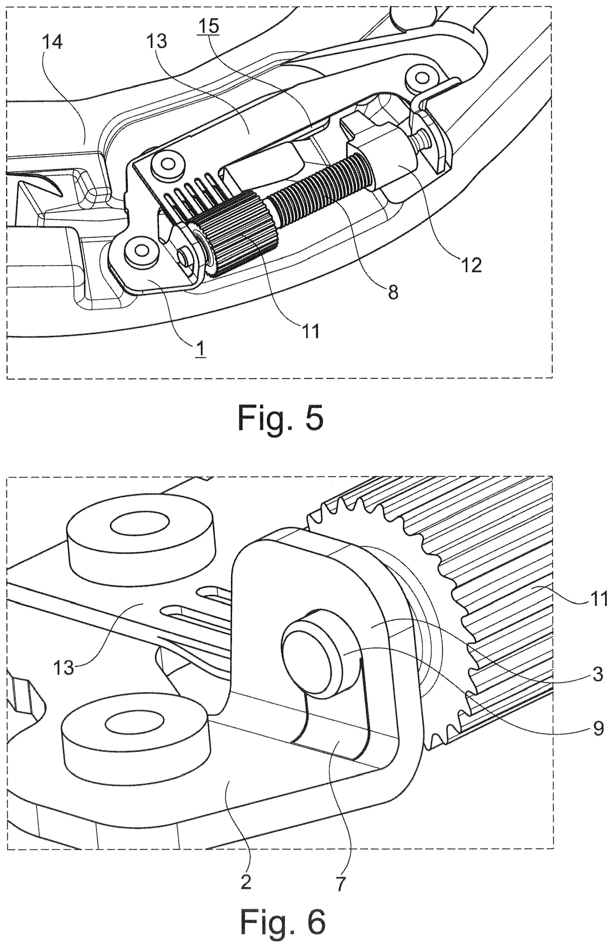

Der Halter 1 ist für eine Reibungskupplung eines Kraftfahrzeugs vorgesehen. Der Halter 1 weist eine Befestigungsplatte 2 zur Verbindung mit einer Anpressplatte 14 gemäß Fig. 5 auf. Die Befestigungsplatte 2 weist einen abstehenden ersten Arm 3 und einen abstehenden zweiten Arm 4. Der erste Arm 3 weist eine erste Öffnung 5 zur Aufnahme eines ersten Spindelwellenendes 9 einer Spindel 8 auf. Der zweite Arm 4 weist eine zweite Öffnung 6 zur Aufnahme eines zweiten Spindelwellenendes 10 der Spindel 8 auf.

Ferner weist der erste Arm 3 im Bereich der ersten Öffnung 5 ein Ansatzstück 7 auf, das als ein elastisch nachgiebiger Ansatz ausgestaltet ist. Das Ansatzstück 7 ist als ein federnder Schnappmechanismus ausgebildet.

Das Ansatzstück 7 ist in einer Verlängerung der ersten Öffnung 5 nach unten hin zur Befestigungsplatte 2 angeordnet.

Dabei ist das Ansatzstück 7 als ein Teilstück des ersten Armes 3 ausgestaltet, das lediglich an einer einzigen Stelle mit dem ersten Arm 5 verbunden ist. Das Ansatzstück kann als eine Art elastisch federnder Kragarm verstanden werden.

Das Ansatzstück 7 weist eine Ausnehmung auf. Mittels der Ausnehmung ist das erste Spindelwellenende 9 in der ersten Öffnung 5 lagerbar. Dabei ist die Ausnehmung Kreissegment-förmig ausgestaltet.

Mit dem erfindungsgemäßen Halter ist das Vorsehen einer Buchse, wie sie aus dem Stand der Technik bekannt ist, zur verliersicheren Halterung der Spindel nicht mehr nötig.

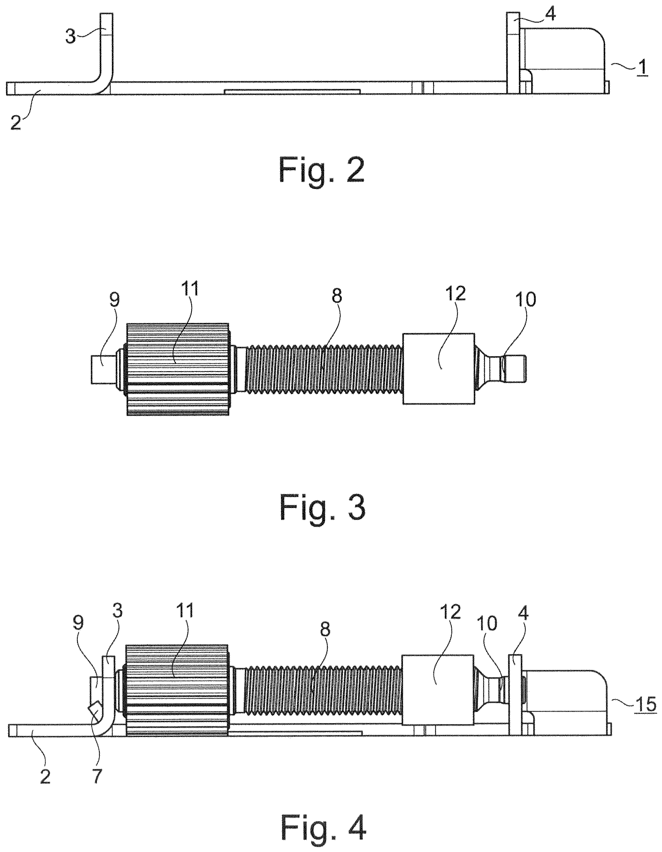

Fig. 2 zeigt den erfindungsgemäßen Halter aus Fig. 1 in einer Seitenansicht.

Der erste Arm 3 und der zweite Arm 4 sind dabei parallel zueinander angeordnet. Die erste Öffnung des ersten Armes 3 und die zweite Öffnung des zweiten Armes 4 liegen einander gegenüber.

Fig. 3 zeigt eine Spindelwelle mit Anbauteilen für den erfindungsgemäßen Halter aus Fig. 1 in einer Seitenansicht.

Die Spindelwelle 8 weist ein Gewinde zum Führen einer auf die Spindelwelle 8 aufgeschraubten Spindelmutter 12 auf.

Die Spindelwelle 8 weist ein erstes Spindelwellenende 9, d.h. ein antriebsritzelseitiges Ende auf. Ein Ritzel 11 ist fest auf der Spindelwelle am ersten Spindelwellenende 9 montiert. Ferner weist die Spindelwelle 8 ein zweites Spindelwellenende 10, d.h. ein spindelmutterseitiges Ende auf.

Das erste Spindelwellenende 9 und das zweite Spindelwellenende 10 weisen einen Kreisförmigen Querschnitt auf.

Fig. 4 zeigt den Halter aus Fig. 2 mit der Spindelwelle aus Fig. 3 kurz vor dem montierten Zustand.

Der Halter 1 und die Spindelwelle 8 mit den erwähnten Anbauteilen bilden einen Spindeltrieb aus.

Der Spindeltrieb wird, wie folgt beschrieben, montiert:
Zunächst erfolgt ein Einbringen der Spindel 8 in den Halter 1, wobei zuerst das zweite Spindelwellenende 10 in die zweite Öffnung 6 eingebracht wird. Damit ist das zweite Spindelwellenende 10 in der zweiten Öffnung 6 gelagert. Im Anschluss daran wird das erste Spindelwellenende 9 in die erste Öffnung 3 eingebracht. Das Einbringen der Spindel erfolgt in der Blattebene von unten her.

Das Ansatzstück 7 ist eingerichtet, während eines Einbringens des ersten Spindelwellenendes 9 in die erste Öffnung 5 elastisch nachzugeben. Dabei ändert das Ansatzstück 7 seine Ausgangslage, indem das Ansatzstück 7 eine Verschiebung nach außen erfährt. Hierbei neigt sich das Ansatzstück 7 gemäß der Fig. 4.

Nach einem erfolgten Einbringen des ersten Spindelwellenendes 9 federt das Ansatzstück 7 dann wieder in seine Ausgangslage zurück. Die Spindelwelle 8 ist dann in der ersten Öffnung 5 zentriert.

Auf diese Weise ist eine einfache Möglichkeit vorgesehen, die Spindel 8 verliersicher im Halter 1 aufzunehmen und axial abzustützen.

Fig. 5 zeigt eine erfindungsgemäße Nachstelleinrichtung auf einer Anpressplatte in perspektivischer Ansicht.

Die Nachstelleinrichtung 15 ist für eine Reibungskupplung eines Kraftfahrzeugs angedacht.

Die Nachstelleinrichtung 15 weist eine Spindel 8 zum axialen Verlagern einer auf der Spindel 8 aufgeschraubten Spindelmutter 12 zum relativen Verdrehen eines Rampenrings (nicht dargestellt) in Umfangsrichtung zu einer an dem Rampenring abgleitenden Gegenrampe (nicht dargestellt) zur Nachstellung eines verschließbedingten Fehlabstands zwischen der Anpressplatte (nicht dargestellt) und einer Gegenplatte der Reibungskupplung durch ein Verdrehen der Spindel 8 auf.

Die Nachstelleinrichtung 15 weist ferner einen Halter 1 zum drehbaren Lagern der Spindel 8, wie unter Fig. 1 bis Fig. 4 beschrieben auf. Der Halter 1 ist über seine Befestigungsplatte 2 mit der Anpressplatte 14 verbunden. Als Verbindungsmittel sind Niete vorgesehen.

Eine Sperrklinke 13 ist auf der Befestigungsplatte 2 des Halters 1 angeordnet. Die Sperrklinke 13 ist eingerichtet, eine Drehung des Ritzels 11 in eine Richtung zu verhindern.

Fig. 6 zeigt eine Detailansicht aus Fig. 5.

Die Spindel 8 ist im Halter 1 montiert. Das erste Spindelwellenende 9 ragt teilweise aus der Öffnung 3 heraus. Das Ansatzstück 7 befindet sich in seiner Ausgangslage, d.h. im nicht belasteten Zustand nach dem Einfederungsvorgang. Die Sperrklinke 13 verhindert eine Drehung des Ritzels 11 im Uhrzeigersinn.

Mit der vorliegenden Erfindung kann durch das Vorsehen des Halters mit dem Ansatzstück auf eine Buchse, wie sie aus dem Stand der Technik bekannt ist, verzichtet werden. Auf diese Weise ist eine Zerstörung der Buchse und eine damit verbundene Beeinträchtigung der Funktion der Nachstelleinrichtung ausgeschlossen.

Wartungsarbeiten an der Nachstelleinrichtung sind damit auf ein Minimum reduzierbar.

### Bezugszeichenliste

- 1: Halter
- 2: Befestigungsplatte
- 3: erster Arm
- 4: zweiter Arm
- 5: erste Öffnung
- 6: zweite Öffnung
- 7: Ansatzstück
- 8: Spindel
- 9: erstes Spindelwellenende
- 10: zweites Spindelwellenende
- 11: Ritzel
- 12: Spindelmutter
- 13: Sperrklinke
- 14: Anpressplatte
- 15: Nachstelleinrichtung

## Patentansprüche

1. Halter (1) für eine Nachstelleinrichtung (15) einer Reibungskupplung eines Kraftfahrzeugs zum drehbaren Lagern einer Spindel (8) aufweisend eine Befestigungsplatte (2) zur Verbindung mit einer Anpressplatte (20), einen von der Befestigungsplatte (2) abstehenden ersten Arm (3) und einen von der Befestigungsplatte (2) abstehenden zweiten Arm (4), wobei
- der erste Arm (3) eine erste Öffnung (5) zur Aufnahme eines ersten Spindelwellenendes (9) einer Spindel (8) aufweist, wobei der erste Arm (3) im Bereich der ersten Öffnung (5) ein Ansatzstück (7) aufweist, das elastisch nachgiebig ausgestaltet ist, und
- der zweite Arm (4) eine zweite Öffnung (6) zur Aufnahme eines zweiten Spindelwellenendes (10) der Spindel (8) aufweist, **dadurch gekennzeichnet, dass**
der Halter (1) einteilig ausgebildet ist, und das Ansatzstück (7) eine Ausnehmung aufweist, um das erste Spindelwellenende (9) zu lagern, und in einer Verlängerung der ersten Öffnung (5) angeordnet ist.

2. Halter (1) gemäß Anspruch 1, wobei das Ansatzstück (7) ein Teilstück des ersten Armes (3) ist, das eine Verbindung mit dem ersten Arm (3) oder der Befestigungsplatte (2) aufweist.

3. Halter (1) gemäß Anspruch 1 oder 2, wobei die Ausnehmung Kreissegment-förmig ausgestaltet ist.

4. Halter (1) gemäß einem der vorherigen Ansprüche, wobei das Ansatzstück (7) gegenüber dem ersten Arm (3) eine Neigung aufweist.

5. Halter (1) gemäß einem der vorherigen Ansprüche, wobei das Ansatzstück (7) eingerichtet ist, während eines Einbringens des ersten Spindelwellenendes (9) in die erste Öffnung (5) an einem seiner Enden nachzugeben.

6. Halter (1) gemäß Anspruch 5, wobei das Ansatzstück (7) eingerichtet ist, nach einem erfolgten Einbringen des ersten Spindelwellenendes (9) in seine Ausgangslage zurückzufedern.

7. Nachstelleinrichtung (15) für eine Reibungskupplung eines Kraftfahrzeugs, aufweisend
- einen einteiligen Halter (1) gemäß einem der vorherigen Ansprüche 1 bis 6 und
- eine Spindel (8) zum axialen Verlagern einer auf der Spindel (8) aufgeschraubten Spindelmutter (12) zum relativen Verdrehen eines Rampenrings in Umfangsrichtung zu einer an dem Rampenring abgleitenden Gegenrampe zur Nachstellung eines verschließbedingten Fehlabstands zwischen einer Anpressplatte und einer Gegenplatte der Reibungskupplung durch ein Verdrehen der Spindel (8).

## Claims

1. Holder (1) for an adjusting device (15) of a friction clutch of a motor vehicle for rotatably mounting a spindle (8) having a fastening plate (2) for connecting to a pressure plate (20), a first arm (3) which projects from the fastening plate (2), and a second arm (4) which projects from the fastening plate (2),
- the first arm (3) having a first opening (5) for receiving a first spindle shaft end (9) of a spindle (8), the first arm (3) having an attachment piece (7) in the region of the first opening (5), which attachment piece (7) is of elastically resilient configuration, and
- the second arm (4) having a second opening (6) for receiving a second spindle shaft end (10) of the spindle (8), **characterized in that**
the holder (1) is configured in one piece, and the attachment piece (7) has a recess, in order to mount the first spindle shaft end (9), and is arranged in an extension of the first opening (5).

2. Holder (1) according to Claim 1, the attachment piece (7) being a part piece of the first arm (3), which part piece has a connection to the first arm (3) or the fastening plate (2).

3. Holder (1) according to Claim 1 or 2, the recess being of circular segment-shaped configuration.

4. Holder (1) according to one of the preceding claims, the attachment piece (7) being inclined with respect to the first arm (3).

5. Holder (1) according to one of the preceding claims, the attachment piece (7) being set up to yield at one of its ends during an introduction of the first spindle shaft end (9) into the first opening (5).

6. Holder (1) according to Claim 5, the attachment piece (7) being set up to spring back into its initial position after an introduction of the first spindle shaft end (9) has taken place.

7. Adjusting device (15) for a friction clutch of a motor vehicle, having
- a single-piece holder (1) according to one of the preceding Claims 1 to 6, and
- a spindle (8) for axially moving a spindle nut (12) which is screwed onto the spindle (8) for the relative rotation of a ramp ring in the circumferential direction with respect to a counter-ramp which slides on the ramp ring for the adjustment of a wear-induced faulty spacing between a pressure plate and a counter-plate of the friction clutch by way of a rotation of the spindle (8).

## Revendications

1. Support (1) pour un dispositif de réglage (15) d'un embrayage à friction d'un véhicule automobile, pour supporter de manière rotative une broche (8) présentant une plaque de fixation (2) pour la liaison à une plaque de pressage (20), un premier bras (3) partant de la plaque de fixation (2) et un deuxième bras (4) partant de la plaque de fixation (2),
- le premier bras (3) présentant une première ouverture (5) pour recevoir une première extrémité d'arbre de broche (9) d'une broche (8), le premier bras (3) présentant dans la région de la première ouverture (5) une pièce rapportée (7), qui est configurée de manière élastiquement flexible, et
- le deuxième bras (4) présentant une deuxième ouverture (6) pour recevoir une deuxième extrémité d'arbre de broche (10) de la broche (8), **caractérisé en ce que**
le support (1) est réalisé d'une seule pièce, et la pièce rapportée (7) présente un évidement afin de supporter la première extrémité d'arbre de broche (9), et est disposée dans un prolongement de la première ouverture (5).

2. Support (1) selon la revendication 1, dans lequel la pièce rapportée (7) est une pièce partielle du premier bras (3) qui présente une liaison au premier bras (3) ou à la plaque de fixations (2).

3. Support (1) selon la revendication 1 ou 2, dans lequel l'évidement est configuré en forme de segment de cercle.

4. Support (1) selon l'une quelconque des revendications précédentes, dans lequel la pièce rapportée (7) présente une inclinaison par rapport au premier bras (3).

5. Support (1) selon l'une quelconque des revendications précédentes, dans lequel la pièce rapportée (7) est prévue pour fléchir au niveau de l'une de ses extrémités pendant l'introduction de la première extrémité d'arbre de broche (9) dans la première ouverture (5).

6. Support (1) selon la revendication 5, dans lequel la pièce rapportée (7) est prévue pour revenir élastiquement dans sa position initiale après une insertion de la première extrémité d'arbre de broche (9).

7. Dispositif de réglage (15) pour un embrayage à friction d'un véhicule automobile, présentant
- un support d'une seule pièce (1) selon l'une quelconque des revendications précédentes 1 à 6 et
- une broche (8) pour le déplacement axial d'un écrou de broche (12) vissé sur la broche (8), en vue de la rotation relative d'une bague de rampe dans la direction périphérique par rapport à une rampe conjuguée glissant sur la bague de rampe en vue du réglage, par une rotation de la broche (8), d'une distance incorrecte causée par l'usure entre une plaque de pressage et une plaque conjuguée de l'embrayage à friction.
